# EUROPEAN PATENT SPECIFICATION

(11) **EP 3 450 851 B1**
(45) Date of publication and mention of the grant of the patent: **10.11.2021**
(21) Application number: 17189059.3
(22) Date of filing: 01.09.2017
(51) Int. Cl.: F23R 3/46, F01D 9/02, F23R 3/60, F23R 3/00

(54) **TRANSITION DUCT FOR A GAS TURBINE CAN COMBUSTOR AND GAS TURBINE COMPRISING SUCH A TRANSITION DUCT**
ÜBERLEITKANAL FÜR EINE GASTURBINENROHRBRENNKAMMER UND GASTURBINE MIT DERARTIGEM ÜBERLEITKANAL
CONDUIT DE TRANSITION POUR UNE CHAMBRE DE COMBUSTION TUBULAIRE DE TURBINE À GAZ ET TURBINE À GAZ COMPORTANT UN TEL CONDUIT DE TRANSITION

(43) Date of publication of application: 06.03.2019
(73) Proprietor: Ansaldo Energia Switzerland AG, 5401 Baden (CH)
(72) Inventor: DE JONGE, Jeffrey, 5400 Baden (CH); MAURER, Michael, 79713 Bad Säckingen (DE); VRBETIC, Dalibor, 47000 Karlovac (HR)
(74) Representative: Martini, Gabriele

(56) References cited:
- EP-A1- 2 915 957
- EP-A2- 1 143 107
- EP-A2- 2 206 886
- EP-A2- 2 216 510

## Description

### Field of the Invention

The present invention relates to a transition duct for a gas turbine can combustor. In particular, the present invention relates to a gas turbine for power plants comprising a plurality of can combustors wherein each can combustor is provided with the above mentioned transition duct for guiding the hot gas from the combustion chamber toward the turbine.

### Description of prior art

As known, a gas turbine for power plants (in the following only gas turbine) comprises a rotor provided with an upstream compressor sector, a combustor sector and a downstream turbine sector. The terms downstream and upstream refer to the direction of the main gas flow passing through the gas turbine. In particular, the compressor comprises an inlet supplied with air and a plurality of blades compressing the passing air. The compressed air leaving the compressor flows into a plenum, i.e. a closed volume, and from there into the combustor. Inside the combustor the compressed air is mixed with at least one fuel. The mixture of fuel and compressed air flows into a combustion chamber inside the combustor where this mixture are combusted. The resulting hot gas leaves the combustor and is expanded in the turbine performing work on the rotor.

The combustor sector can be realized in form of a plurality of can combustors annularly arranged as a ring around the turbine axis and supported by an outer casing delimiting the plenum.

Each can-combustor is provided with a transition duct arranged downstream the combustion chamber for guiding the hot gas leaving the combustion chamber toward the turbine, in particular toward the first vane of the turbine. The transition duct is realized in form of a tubular body having an upstream end connected to the outlet of the respective combustion chamber and a downstream end connected to the inlet of the turbine. The downstream part of the transition duct comprises a frame in form a square flange, called in this field as "picture frame", configured for being coupled to the turbine in a sealed manner. As foregoing described, the transition duct is configured for guiding the hot gas flow from the combustion chamber outlet to the turbine inlet and are thus exposed to extremely high temperatures. In some kinds of gas turbines, for example, the temperature of hot gas may reach 1800 K or more. As other components of gas turbines, in view of this high hot gas temperature also the transition duct requires to be cooled in order to avoid damages caused by overheating and to increase lifetime.

For this purpose of cooling, the transition duct comprises a hot shell, in form of an inner tubular body having the inner surface in contact with the hot gas, and a cold shell comprising an outer tubular body arranged spaced around the inner tubular body and having the outer surface in contact with the compressed air housed in the plenum.

The inner and outer tubular body defines between them a cooling channel for a relatively fresh airflow taken from plenum, i.e. the compressed air delivered by the compressor.

The cold shell moreover comprises a first frame, in form of a flange, at its downstream that is substantially perpendicular to the outer tubular body. This first frame is provided with a plurality of passing holes for housing bolts configured for connecting the cold shell to the picture frame. Preferably, some spacers projecting from the outer surface of the hot shell are present between the picture frame and the first frame of the cold shell. According to the prior art practice, the first frame is integral with the outer tubular body, i.e. the first frame and the outer tubular body are realized as a single body. In this configuration, according to the current prior art the cooling airflow enters the cooling channel between the inner and the outer tubular body passing through a plurality of impingement holes provided in the outer tubular body in order to realize a cooling airflow directed substantially perpendicularly to the outer surface of the inner tubular body.

However, the above impingement cooling is not free from drawbacks or limitations. In the first place, creating impinging jets by feeding air through the outer tubular body and against the outer surface of the inner tubular body causes a substantial pressure drop across the impingement cooling holes, on account of the fluidic resistance of the holes and turbulence created by impingement. The pressure drop thus results in a loss of efficiency of the gas turbine, because quite a large airflow needs to be subtracted from the overall airflow processed by the compressor in order to provide a given cooling effect.

Another limitation of impingement cooling resides in that it may be difficult to adequately cool the downstream portion of the transition duct, in particular at the connection between the first frame with picture frame. On the one side, the residual amount of air at the downstream end of the transition duct may be rather small, as most of the available airflow flows through the impingement cooling holes before reaching the connection with the turbine section. On the other side, in view of the geometry of the current cold shell it is hardly feasible to direct impinging air toward the downstream portion of the transition duct. Transition ducts are generally known from EP2206886, EP2216510, EP1143107 and EP2915957.

### Disclosure of the invention

Accordingly, a primary object of the present invention is to provide a transition duct for a gas turbine combustor can suitable for overcoming the drawbacks of the prior art practice. In particular, the present invention is to provide a transition duct for a gas turbine combustor can having an improved cooling feature suitable for cooling also the downstream portion of the transition duct.

In order to achieve the objective mentioned above, the present invention provides a transition duct for a gas turbine can combustor comprising a hot shell in form of an inner tubular body defining a transition channel for the hot gas flow M leaving the combustion chamber. The inner tubular body, or hot shell in the following, comprises a upstream end and a downstream end configured to be coupled to the can combustor combustion chamber and to the turbine respectively. The terms upstream and downstream refer to the hot gas flow direction M from the combustion chamber toward the turbine.

As known, the downstream end of the hot shell is provided with a frame, called in the field as picture frame, configured to be coupled in a sealed manner to the first vane of the turbine and to be fixed to the outer casing of the gas turbine. For this reason the picture frame comprises a seal, in particular a honeycomb seal, configured to be coupled in a sealed manner with the vane tooth of the vane platform of the first turbine vane.

The transition duct moreover comprises a cold shell comprising a first frame coupled via bolts to the picture frame and an outer tubular body arranged spaced around the inner tubular body for forming a convective cooling channel. The outer tubular body is downstream connected to the first frame (according to the prior art is made integral, i.e. a single piece with the first frame) and has an upstream end at the upstream end of the inner tubular body. As known, both the picture frame and the first frame are in form of flanges orthogonally outwardly protruding the transition channel.
According to the main aspect of the invention, the first frame and the outer tubular body are realized as separated and independent bodies. Moreover, these two independent bodies are divided by a first annular gap, preferably around the entire transition channel, for allowing the cooling air (C) to enter the convective cooling channel.

According to the above technical features, the mentioned annular gap acts as an inlet for the cooling air entering the convective cooling channel. Since this annular gap is realized between the first frame and the outer tubular body, i.e. at the inner portion of the first frame at the downstream end of the transition duct, the present invention allow to adequately cool the downstream portion of the transition duct. Moreover, the convective cooling configuration is preferable with respect to the common impingement cooling configuration in view of a less pressure drop required.

Preferably, the first frame and the outer tubular body are connected each other by a plurality of connecting ribs, preferably parallel to the hot gas flow M, acting as a bridge between the first frame and the outer tubular body. According to this embodiment the connecting ribs are on one side connected to the outer tubular body and on another side connected to the first frame. The coupling portions of the connecting ribs are preferably housed, and more preferably welded, in respective pre-cutting slots realized in the first frame and in the outer tubular body. Each connecting rib acts as an integrated welding tool or fixture.

According to the above technical features, the welded connecting ribs allow to guarantee the required structural strength of the cold shell even if such a cold shell is realized in form of two separated bodies. Moreover, the pre-cutting slots enable an easy assembly of the cold shell.

Preferably, the downstream edge of the outer tubular body defining the annular gap is bent to steer the cooling flow C along the outer surface of the inner tubular body. This technical feature allows to improve the cooling effect on the convective cooling channel.

According to an embodiment of the invention, the outer tubular body may be realized in form of at least two separated independent bodies. In particular, such an outer tubular body may comprise a downstream and at least an upstream outer tubular body arranged in series around the hot shell along the hot gas flow M. The downstream and the upstream tubular body are realized as separated bodies divided by a second annular gap for allowing the cooling air C to enter the convective cooling channel.

According to the above technical features, the mentioned second annular gap acts as a second inlet for the cooling air entering the convective cooling channel in order to maximize the cooling effect.

In this embodiment the connecting ribs connect as a double bridge respectively the first frame, the downstream and the upstream outer tubular body. Also the downstream edge of the upstream outer tubular body defining the second annular gap can be bent to steer the cooling flow C along the outer surface of the inner tubular body. Such downstream edge of the upstream outer tubular body could be used as a flow separator to modify the air split between first and second gap.

The invention has been foregoing described with reference to the transition duct. However, the present invention refers also to the can combustor and in general to the gas turbine provided with such a transition duct.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
Fig. 1 is a schematic view of a gas turbine for power plants provided with a plurality of can combustors;
Fig. 2 is a schematic prospective view of a transition duct according to an embodiment of the invention;
Fig. 3 is a schematic sectional view of a portion of the downstream portion of the transition duct of Fig. 2;
Fig. 4 and Fig. 5 are schematic views of the outer shell of the transition duct of Fig. 2 respectively before and after the last assembly step.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

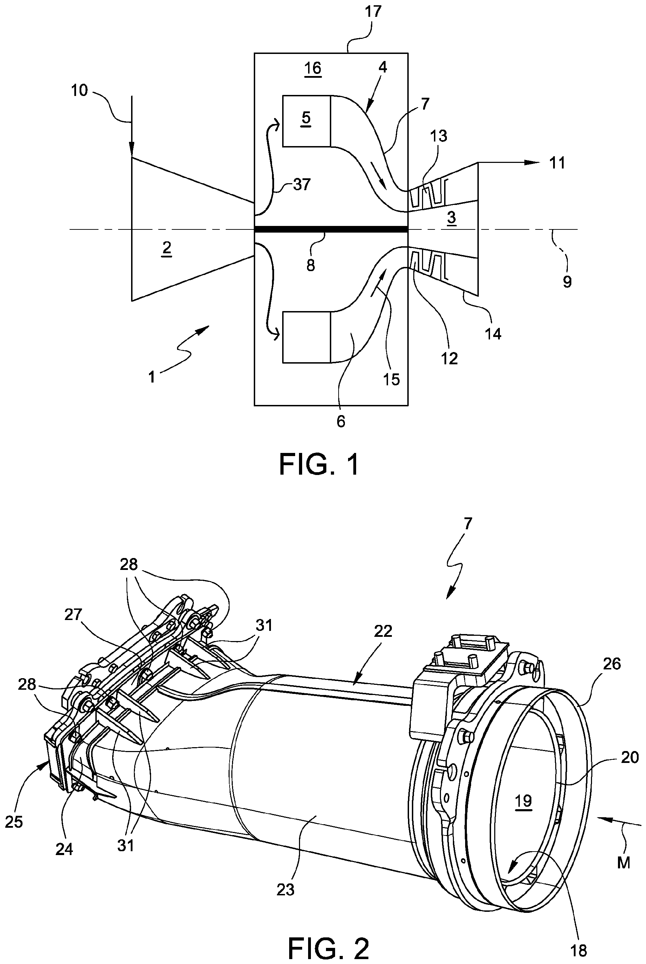

Reference is made to Fig. 1 that is a schematic view of a gas turbine for power plants provided with a plurality of can combustors.

In particular, figure 1 discloses a gas turbine 1 having an axis 9 and comprising a compressor 2, a combustor sector 4 and a turbine 3. As known, ambient air 10 enters the compressor 2 and compressed air leaves the compressor 2 and enters in a plenum 16, i.e. a volume define by an outer casing 17. From the plenum 16, the compressed air 37 enters in the combustor that comprises a plurality of can combustors 4 annularly arranged around the axis 9. The terms annular, radial, axial, inner and outer refer to the axis 9 whereas the terms downstream and upstream refer to the gas main flow. Each can combustor 4 comprises a burner 5 where the compressed air 37 is mixed with at least a fuel. This mixture is then combusted in a combustion chamber 6 and the resulting hot gas flows in a transition duct 7 downstream connected to the turbine 3. The turbine 3 comprises a plurality of vanes 12, i.e. stator blades, supported by a vane carrier 14, and a plurality of blades 13, i.e. rotor blades, supported by a rotor 8. In the turbine 3, the hot gas expands performing work on the rotor 8 and leaves the turbine 3 in form of exhaust gas 11.

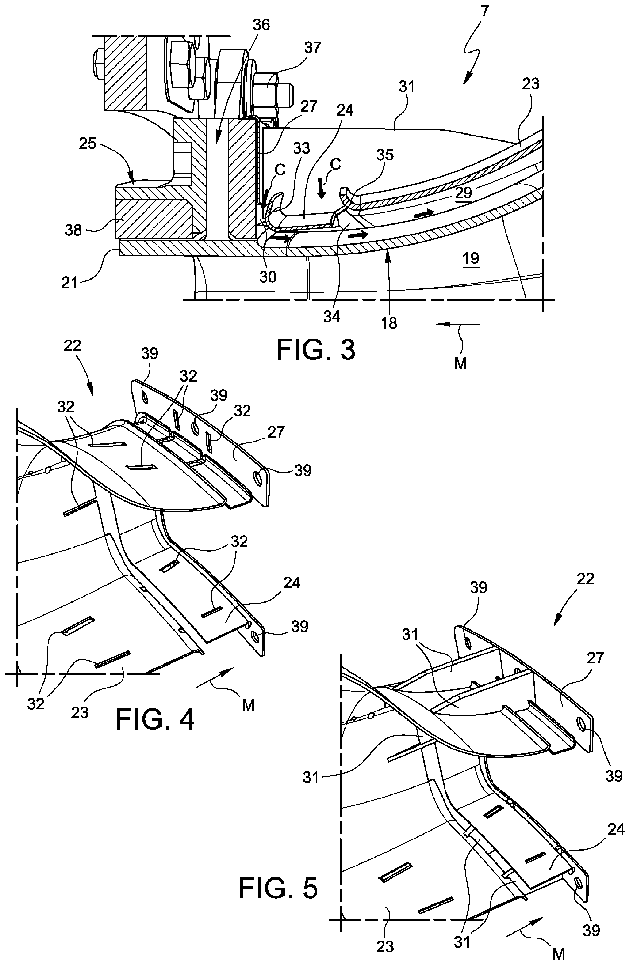

Fig. 2 is a schematic prospective view of a transition duct 7 according to an embodiment of the invention. According to figure 2, the transition duct 7 comprises an inner tubular body 18, known in the field as hot shell, defining a channel for the hot gas M leaving the combustion chamber (not shown) and directed toward the turbine (not shown). The inner tubular body 18 comprises an upstream end 20 configured to the coupled with the outlet of the combustion chamber and a downstream end 21 (see figure 3) supporting a frame 25, known in the field as picture frame, configured to be coupled in a sealed manner to the first vane of the turbine. Around the inner tubular body 18 the transition duct 7 comprises a cold shell 22. As known, the inner tubular body and the cold shell 22, in particular the tubular portion 23 24 of the cold shell 22, are spaced each other to realize a cooling channel for cooling air, i.e. compressed air delivered by the compressor in the plenum. According to the invention, the cooling channel is a convective cooling channel. The cold shell 22 comprises two tubular portions 23 24 arranged in series along the direction of the gas flow M and a downstream first frame 27 coupled by bolt 28 to the picture frame 25. The connection between the two tubular portion 23 24 of the cold shell 22 and the connection between the downstream tubular portion 24 and the first frame 27 is disclosed in figure 3.

Fig. 3 is a schematic enlarged sectional view of a portion of the downstream portion of the transition duct of Fig. 2. According to this embodiment, the first frame 27 and the two tubular portions 23 24 of the cold shell 22 are realized in three independent and separated bodies. These three bodies are kept in the correct relative position by a plurality of connecting ribs 31 acting as a bridge, in particular a double bridge, between these components. The bolts connecting the first frame 27 to the picture frame 25 are not shown in figure 3 that however discloses the bolts 37 for connecting the picture frame 25 to the outer casing of the gas turbine and a seal 38, i.e. a honeycomb seal, configured to be coupled to the vane tooth of the first vane of the turbine. A spacer 36 protruding from the outer surface of the hot shell 18 is represented between the first frame 27 and the picture frame 25. According to the example of figure 3, the convective cooling channel 29 has two inlets 30 34 in form of annual gaps arranged respectively between the first frame 37 and the downstream portion 24 of the cold shell 22 and between the downstream 24 and the upstream portion 25 of the cold shell 22. Preferably, the downstream edges 33 35 of the downstream 24 and the upstream portion 25 of the cold shell are rounded to improve the penetration of the cooling air C in the convective cooling channel 29. Of course, the cooling channel 29 is defined as "convective" with respect to the prior art where the transition duct cooling channel is an impingement cooling channel.

Fig. 4 and Fig. 5 are schematic views of the outer shell 22 of the transition duct 7 of Fig. 2 respectively before and after the last assembly step. In particular, figure 4 discloses the three bodies forming the cooling shell 22. Figure 4 shows clearly how these three bodies are independent and separated. Moreover, figure 4 discloses a plurality of pre-cutting slots realized in these three bodies of the cold shell 22 suitable for housing relative portions of the connecting ribs 41. The frame 27 of figure 4 comprises a plurality of holes 39 configured for housing the bolts 28 (see figure 2) connecting the cold shell 22 to the picture frame 25.

Finally, figure 5 discloses the positioning of the connecting ribs 31 so that some portions of such connecting ribs 31 are housed and preferably welded in the relative slots 32.

Although the invention has been explained in relation to its preferred embodiment(s) as mentioned above, it is to be understood that many other possible modifications and variations can be made without departing from the scope of the present invention.

## Claims

1. Transition duct for a gas turbine can combustor; the transition duct (7) comprising:
- a hot shell (18) in form of an inner tubular body defining a transition channel (19) and having an upstream end (20) and a downstream end (21) for coupling to a can combustor combustion chamber (6) and to a turbine (3) respectively;
- a picture frame (25) at the downstream end (21) of the hot shell (18);
- a cold shell (22) comprising a first frame (27) coupled via bolts (28) to the picture frame (25) and an outer tubular body (23, 24) arranged spaced around the inner tubular body (18) for forming a convective cooling channel (29); the outer tubular body (23, 24) being downstream connected to the first frame (27) and having an upstream end (26) at the upstream end (20) of the inner tubular body (18);
**characterized in that**
the first frame (27) and the outer tubular body (23, 24) are realized as separated bodies divided by a first annular gap (30) for allowing the cooling air (C) to enter the convective cooling channel (29).

2. Transition duct as claimed in claim 1, wherein the first frame (27) and the outer tubular body (23, 24) are connected each other by a plurality of connecting ribs (31) on one side connected to the outer tubular body (23, 24) and on another side connected to the first frame (27).

3. Transition duct as claimed in claim 2, wherein the connecting ribs (31) comprises portions housed in respective pre-cutting slots (32) realized in the first frame (27) and in the outer tubular body (23, 24).

4. Transition duct as claimed in claim 3, wherein the portions of the connecting ribs (31) housed in the respective pre-cutting slots (32) are welded to the first frame (27) and to the outer tubular body (23, 24).

5. Transition duct as claimed in any one of the foregoing claims, wherein the downstream edge (33) of the outer tubular body (23, 24) defining the first annular gap (30) is bent to steer the cooling flow (C) along the outer surface of the inner tubular body (18).

6. Transition duct as claimed in any one of the foregoing claims, wherein the outer tubular body (23, 24) comprises a downstream (24) and at least an upstream outer tubular body (23); the downstream (24) and the upstream tubular body (23) being realized as separated bodies (23, 24) divided by a second annular gap (34) for allowing the cooling air (C) to enter the convective cooling channel (29).

7. Transition duct as claimed in claim 6, wherein the first frame (27), the downstream (24) and the upstream outer tubular body (23) are connected each other by a plurality of connecting ribs (31) connecting respectively the first frame (27), the downstream (24) and the upstream outer tubular body (23) .

8. Transition duct as claimed in claim 7, wherein the connecting ribs (31) comprises portions housed in respective pre-cutting slots (32) realized in the first frame (27), in the downstream (24) and in the upstream outer tubular body (23) .

9. Transition duct as claimed in claim 8, wherein the portions of the connecting ribs (31) housed in the respective pre-cutting slots (32) are welded to the first frame (27), to the downstream (24) and to the upstream outer tubular body (23).

10. Transition duct as claimed in any foregoing claims from 6 to 9, wherein the downstream edge (35) of the upstream outer tubular body (23) defining the second annular gap (34) is bent to steer the cooling flow (C) along the outer surface of the inner tubular body (18).

11. Can combustor for a gas turbine, the can combustor (4) comprising a burner (5), a combustion chamber (6) and a transition duct (7) for guiding the hot gas toward a turbine (3); wherein the transition duct (7) is realized according to any one of the foregoing claims.

12. Gas turbine for power plant; the gas turbine (1) having an axis (9) and comprising:
- a compressor (2) for compressing ambient air,
- a plenum (16) for receiving compressed air leaving the compressor (2),
- a plurality of can combustors (4) for mixing and combusting the compressed air leaving the plenum (16) with at least a fuel,
- a turbine (3) for expanding the combusted hot gas flow (15) leaving the can combustors (4) and performing work on a rotor (8);
wherein each can combustor (4) comprises a transition duct (7) for guiding the hot gas toward a turbine (3); the transition duct (7) being realized according to any one of the foregoing claims from 1 to 10.

## Patentansprüche

1. Übergangsleitung für eine Rohrbrennkammer einer Gasturbine, welche Übergangsleitung (7) enthält:
- eine Heißschale (18) in Form eines inneren rohrförmigen Körpers, der einen Übergangskanal (19) bildet und ein stromaufwärts liegendes Ende (20) und ein stromabwärts liegendes Ende (21) zur Verbindung mit der Brennkammer (6) einer Rohrbrennkammer bzw. mit einer Turbine (3) aufweist;
- einen Bilderrahmen (25) am stromabwärts liegenden Ende (21) der Heißschale (18);
- eine Kaltschale (22), die einen durch Bolzen (28) mit dem Bilderrahmen (25) gekoppelten ersten Rahmen (27) und einen äußeren rohrförmigen Körper (23, 24) aufweist, der im Abstand um den inneren rohrförmigen Körper (18) angeordnet ist und einen Konvektionskühlkanal (29) bildet; wobei der äußere rohrförmige Körper (23, 24) stromabwärts mit dem ersten Rahmen (27) verbunden ist und ein stromaufwärts liegendes Ende (26) an dem stromaufwärts liegenden Ende (20) des inneren rohrförmigen Körpers (18) hat;
**dadurch gekennzeichnet, dass** der erste Rahmen (27) und der äußere rohrförmige Körper (23, 24) als getrennte Körper ausgebildet sind, die durch einen ersten ringförmigen Spalt (30) geteilt sind, um den Eintritt von Kühlluft (C) in den Konvektionskühlkanal (29) zu erlauben.

2. Übergangsleitung nach Anspruch 1, wobei der erste Rahmen (27) und der äußere rohrförmige Körper (23, 24) durch eine Vielzahl von Verbindungsrippen (31), die auf einer Seite mit dem äußeren rohrförmigen Körper (23, 24) und auf einer anderen Seite mit dem ersten Rahmen (27) verbunden sind, miteinander verbunden sind.

3. Übergangsleitung nach Anspruch 2, wobei die Verbindungsrippen (31) Teile umfassen, die in jeweiligen vorgeschnittenen Schlitzen (32) untergebracht sind, die in dem ersten Rahmen (27) und in dem äußeren rohrförmigen Körper (23, 24) ausgebildet sind.

4. Übergangsleitung nach Anspruch 3, wobei die in den jeweiligen vorgeschnittenen Schlitzen (32) untergebrachten Teile der Verbindungsrippen (31) mit dem ersten Rahmen (27) und dem äußeren rohrförmigen Körper (23, 24) verschweißt sind.

5. Übergangsleitung nach einem der vorhergehenden Ansprüche, wobei der stromabwärts liegende Rand (33) des äußeren rohrförmigen Körpers (23, 24), der den ersten ringförmigen Spalt (30) bildet, umgebogen ist, um den Kühlstrom (C) entlang der äußeren Oberfläche des inneren rohrförmigen Körpers (18) zu lenken.

6. Übergangsleitung nach einem der vorhergehenden Ansprüche, wobei der äußere rohrförmige Körper (23, 24) einen stromabwärts (24) liegenden und mindestens einen stromaufwärts liegenden äußeren rohrförmigen Körper (23) aufweist; wobei der stromabwärts (24) liegende und der stromaufwärts liegende rohrförmige Körper (23) als getrennte Körper (23, 24) ausgebildet sind, die durch einen zweiten ringförmigen Spalt (34) geteilt sind, um den Eintritt von Kühlluft (C) in den Konvektionskühlkanal (29) zu erlauben.

7. Übergangsleitung nach Anspruch 6, wobei der erste Rahmen (27), der stromabwärts (24) liegende und der stromaufwärts liegende äußere rohrförmige Körper (23) durch eine Vielzahl von Verbindungsrippen (31) miteinander verbunden sind, die jeweils den ersten Rahmen (27), den stromabwärts (24) liegenden und den stromaufwärts liegenden äußeren rohrförmigen Körper (23) verbinden.

8. Übergangsleitung nach Anspruch 7, wobei die Verbindungsrippen (31) Teile umfassen, die in jeweiligen vorgeschnittenen Schlitzen (32) untergebracht sind, die in dem ersten Rahmen (27) in dem stromabwärts (24) liegenden und in dem stromaufwärts liegenden äußeren rohrförmigen Körper (23) ausgebildet sind.

9. Übergangsleitung nach Anspruch 8, wobei die in den jeweiligen vorgeschnittenen Schlitzen (32) untergebrachten Teile der Verbindungsrippen (31) mit dem ersten Rahmen (27), mit dem stromabwärts (24) liegenden und mit dem stromaufwärts liegenden äußeren rohrförmigen Körper (23) verschweißt sind.

10. Übergangsleitung nach einem der vorhergehenden Ansprüche von 6 bis 9, wobei der stromabwärts liegende Rand (35) des stromaufwärts liegenden äußeren rohrförmigen Körpers (23), der den zweiten ringförmigen Spalt (34) bildet, umgebogen ist, um den Kühlstrom (C) entlang der äußeren Oberfläche des inneren rohrförmigen Körpers (18) zu lenken.

11. Rohrbrennkammer für eine Gasturbine, wobei die Rohrbrennkammer (4) einen Brenner (5), eine Brennkammer (6) und eine Übergangsleitung (7) zum Leiten des Heizgases zu einer Turbine (3) umfasst; wobei die Übergangsleitung (7) gemäß einem der vorhergehenden Ansprüche ausgebildet ist.

12. Gasturbine für ein Kraftwerk, welche Gasturbine (1) eine Achse (9) hat und umfasst:
- einen Verdichter (2) zum Verdichten von Umgebungsluft,
- einen Raum (16) zum Aufnehmen von aus dem Verdichter (2) austretender verdichteter Luft,
- eine Vielzahl von Rohrbrennkammern (4) zum Mischen und Verbrennen der aus dem Raum (16) austretenden verdichteten Luft mit mindestens einem Brennstoff,
- eine Turbine (3) zum Expandieren des aus den Rohrbrennkammern (4) austretenden verbrannten Heißgasstroms (15) und zum Leisten von Arbeit an einem Rotor (8);
wobei jede Rohrbrennkammer (4) eine Übergangsleitung (7) zum Leiten des Heißgases zu einer Turbine (3) umfasst, wobei die Übergangsleitung (7) nach einem der vorhergehenden Ansprüche von 1 bis 10 ausgebildet ist.

## Revendications

1. Conduit de transition pour une chambre de combustion de type canette de turbine à gaz ; le conduit de transition (7) comprenant :
- une enveloppe chaude (18) sous la forme d'un corps tubulaire interne définissant un canal de transition (19) et ayant une extrémité amont (20) et une extrémité aval (21) pour le couplage à une chambre de combustion de chambre de combustion de type canette (6) et à une turbine (3) respectivement ;
- un cadre d'image (25) à l'extrémité aval (21) de l'enveloppe coque chaude (18) ;
- une coque froide (22) comprenant un premier cadre (27) couplé par des boulons (28) au cadre d'image (25) et un corps tubulaire extérieur (23, 24) disposé à distance autour du corps tubulaire intérieur (18) pour former un canal de refroidissement par convection (29) ; le corps tubulaire extérieur (23, 24) étant relié en aval au premier cadre (27) et ayant une extrémité amont (26) à l'extrémité amont (20) du corps tubulaire intérieur (18) ;
**caractérisé en ce que**
le premier cadre (27) et le corps tubulaire extérieur (23, 24) sont réalisés comme des corps séparés divisés par un premier espace annulaire (30) pour permettre à l'air de refroidissement (C) d'entrer dans le canal de refroidissement par convection (29).

2. Conduit de transition selon la revendication 1, dans lequel le premier cadre (27) et le corps tubulaire extérieur (23, 24) sont reliés l'un à l'autre par une pluralité de nervures de liaison (31) sur un côté relié au corps tubulaire extérieur (23, 24) et sur un autre côté relié au premier cadre (27).

3. Conduit de transition selon la revendication 2, dans lequel les nervures de connexion (31) comprennent des parties logées dans des fentes de prédécoupage respectives (32) réalisées dans le premier cadre (27) et dans le corps tubulaire extérieur (23, 24).

4. Conduit de transition selon la revendication 3, dans lequel les parties des nervures de liaison (31) logées dans les fentes de prédécoupage respectives (32) sont soudées au premier cadre (27) et au corps tubulaire extérieur (23, 24).

5. Conduit de transition selon l'une quelconque des revendications précédentes, dans lequel le bord aval (33) du corps tubulaire extérieur (23, 24) définissant le premier espace annulaire (30) est courbé pour diriger le flux de refroidissement (C) le long de la surface extérieure du corps tubulaire intérieur (18).

6. Conduit de transition selon l'une quelconque des revendications précédentes, dans lequel le corps tubulaire extérieur (23, 24) comprend un corps tubulaire extérieur aval (24) et au moins un corps tubulaire extérieur amont (23) ; le corps tubulaire aval (24) et le corps tubulaire amont (23) étant réalisés sous forme de corps séparés (23, 24) divisés par un second espace annulaire (34) pour permettre à l'air de refroidissement (C) de pénétrer dans le canal de refroidissement par convection (29).

7. Conduit de transition selon la revendication 6, dans lequel le premier cadre (27), le corps tubulaire extérieur aval (24) et le corps tubulaire extérieur amont (23) sont reliés entre eux par une pluralité de nervures de liaison (31) reliant respectivement le premier cadre (27), le corps tubulaire extérieur aval (24) et le corps tubulaire extérieur amont (23).

8. Conduit de transition selon la revendication 7, dans lequel les nervures de liaison (31) comprennent des parties logées dans des fentes de prédécoupage respectives (32) réalisées dans le premier cadre (27), dans le corps tubulaire extérieur aval (24) et dans le corps tubulaire extérieur amont (23).

9. Conduit de transition selon la revendication 8, dans lequel les parties des nervures de liaison (31) logées dans les fentes de prédécoupage respectives (32) sont soudées au premier cadre (27), au corps tubulaire extérieur aval (24) et au corps tubulaire extérieur amont (23).

10. Conduit de transition selon l'une quelconque des revendications 6 à 9 précédentes, dans lequel le bord aval (35) du corps tubulaire extérieur amont (23) définissant le second espace annulaire (34) est courbé pour diriger le flux de refroidissement (C) le long de la surface extérieure du corps tubulaire intérieur (18).

11. Chambre de combustion tubulaire pour une turbine à gaz, la chambre de combustion tubulaire (4) comprenant un brûleur (5), une chambre de combustion (6) et un conduit de transition (7) pour guider le gaz chaud vers une turbine (3) ; dans laquelle le conduit de transition (7) est réalisé selon l'une quelconque des revendications précédentes.

12. Turbine à gaz pour centrale électrique ; la turbine à gaz (1) ayant un axe (9) et comprenant :
- un compresseur (2) pour comprimer l'air ambiant,
- un plénum (16) pour recevoir l'air comprimé sortant du compresseur (2),
- une pluralité de chambres de combustion tubulaires (4) pour mélanger et brûler l'air comprimé quittant le plénum (16) avec au moins un combustible,
- une turbine (3) pour détendre le flux de gaz chauds brûlés (15) quittant les chambres de combustion tubulaires (4) et effectuant un travail sur un rotor (8) ;
dans lequel chaque chambre de combustion tubulaire (4) comprend un conduit de transition (7) pour guider le gaz chaud vers une turbine (3) ; le conduit de transition (7) étant réalisé selon l'une quelconque des revendications 1 à 10 précédentes.
